# EUROPEAN PATENT APPLICATION

(11) **EP 2 072 864 A2**
(43) Date of publication of application: **24.06.2009**
(21) Application number: 08021601.3
(22) Date of filing: 12.12.2008
(51) Int. Cl.: F16H 61/12

(54) **Control method for gear-type transmission apparatus**

(30) Priority: 14.12.2007 JP 2007323702
(71) Applicant: AISIN AI Co., Ltd., Nishio-shi, Aichi-ken (JP)
(72) Inventor: Ito, Yoshiki, Nishio-shi Aichi-ken (JP)
(74) Representative: Marshall, John Grahame

(57) **Abstract**

A control method for a gear-type transmission apparatus, the gear-type transmission apparatus includes a gear train (2), a gear shift mechanism (3) for changing an engagement combination of the gear train (2) and having a gear stopper, a synchronizer ring and a sleeve, an actuator (7B) driving the gear shift mechanism (3), a progress status detecting sensor (8B) detecting a progress status of the gear shift mechanism (3), a temperature sensor (8C) detecting temperature of the progress status detecting sensor (8B) and a control device (10) controlling the actuator (7B) based on an input from the progress status detecting sensor (8B) and memorizing a previously obtained gear stopper position and maximum sensor drift amount, the control method includes steps of detecting a shift operation, detecting the temperature of the progress status detecting sensor (8B), obtaining the maximum sensor drift amount, defining a control stopper position, and controlling a driving speed of the actuator (7B) when or before the sleeve reaches the control stopper position.

## Description

### FIELD OF THE INVENTION

The present invention relates to a control method for a geax-type transmission apparatus.

### BACKGROUND

There exists various transmission for a vehicle, for example, a manual transmission configured so that shift stages are changed by a driver conducting a shift operation, and an automatic transmission configured so that the shift operation is automatically conducted. The known manual transmission apparatus is usually provided with an input shaft for transmitting an input rotation of an engine and the like, an output shaft for transmitting an output rotation to wheels, plural driving gears fixed on the input shaft, plural idler gears normally engaged with the corresponding driving gears and idly rotatably provided at the output shaft, a synchronizer ring integrally rotated with the output shaft and frictionally engaged with each idler gear, and a sleeve integrally rotated with the output shaft and engaged with each idler gear. A synchromesh-type automatic transmission apparatus is configured by combining an electronic control device, an actuator and the like with the manual transmission apparatus having the above-described configuration.

Disclosed in JP2004-19914A is a control device for the synchromesh-type automatic transmission apparatus. The control device disclosed in JP2004-19914A includes an input shaft rotational speed sensor, an output shaft rotational speed sensor, plural shift gears, a shift/select actuator, a shift/select position sensor, and a control mean so that the control device detects an abnormal failure in synchronization, in which the input shaft and the output shaft fail to synchronize when the shift operation is conducted.

In the shift operation, generally, when a new gear set is selected, firstly, the corresponding synchronizer ring is driven, so that the input shaft and the output shaft frictionally engage with each other, thereby gradually being synchronized therebetween.
Then, the corresponding sleeve is driven, so that the sleeve is spline-engaged with a corresponding idler gear or a driven gear and collides with a gear stopper, thereby firmly and completely connecting the input shaft and the output shaft and completing the shift operation. Generally, the transmission apparatus is configured so that an output load of the actuator generated when driving the synchronizer rings is set to be greater in order to achieve synchronization in a short time for the shift operation, and so that an output load for driving the sleeve is set to be lower in order to reduce shock caused when the sleeve is engaged with the corresponding idler gear.

Further, in order to reduce collision noise and impact generated when the sleeve is spline-engaged with the corresponding idler gear and collides with the gear stopper, a driving amount of the actuator is detected by a stroke sensor, so that an operation for reducing a driving speed of the sleeve before colliding with the gear stopper is executed. More specifically, in order to solve a sensor (an output) drift of the stroke sensor caused by temperature, the control device is configured to calculate and learn an output value of the stroke sensor of when the sleeve is pressed against the gear stopper while the sleeve is engaged with the idler gear or the driven gear of the selected gear set. Then, when the same gear set is selected next time, the gear stopper position previously learnt when the corresponding sleeve was engaged with the gear stopper for the selected gear set is used, so that the driving speed of the sleeve is reduced before the sleeve collides with the gear stopper, Accordingly, the sleeve collides with the gear stopper at a lower speed, thereby reducing the collision noise and the impact generated when the sleeve is spline-engaged with the idler gear or the driven gear and collides with the sleeve.

Thermal sensor drift of the stroke sensor that detects a position of the sleeve needs to be taken into account for an impact speed control executed when the sleeve of the known synchromesh-type automatic transmission apparatus spline-engaged with the corresponding idler gear or the driven gear and collides with the gear stopper. Therefore, the control device needs to frequently learn the stroke sensor output values indicating the gear stopper positions. Further, in a case where changes of a running speed of the vehicle is great, e.g. in a case where the vehicle accelerates or decelerates, while the control device is in a learning process, a phenomena in which the gear stopper positions are mechanically displaced may occur. Hence, the control device needs to learn the gear stopper positions in a state where the vehicle stably movies with less changes in speed. Further, in a case where the gear set is selected and engaged for driving the vehicle after the control device learns the gear stopper positions and the vehicle is stopped and left for a predetermined extended time (e.g. for overnight), the sensor drift becomes great because a temperature difference between when the control device learns the gear stopper position and when the sleeve is engaged with the idler gear of the selected gear set to start the vehicle after being parked' and left for the predetermined extended time is great. Accordingly, the leant stopper positions of the gears may greatly differ from actual stopper positions of the gears. In order to reduce the collision of the sleeves to the gear stoppers even in the above-described case, the sleeve speed needs to be reduced well before the sleeves reach the corresponding actual stopper positions. Therefore, time necessary for shifting the shift stages may increase.

A need thus exists to provide a control method for a gear-type transmission apparatus for controlling a contact of a sleeve with a gear stopper while allowing a displacement phenomena of a stopper position caused by thermal sensor drift of a stroke sensor and an acceleration/deceleration state of a vehicle.

### SUMMARY OF THE INVENTION

According to an aspect of the present invention, a control method for a gear-type transmission apparatus, the gear-type transmission apparatus includes a gear train having a plurality of gear engagement combinations each of which is assigned to have different shift stage from each other, a gear shift mechanism for shifting the shift stage by changing the engagement combination of the gear train and having a synchromesh mechanism, which includes a synchronizer ring and a sleeve, the gear shift mechanism having a gear stopper at an engagement completion position, an actuator driving the gear shift mechanism, a progress status detecting sensor detecting a progress status of the gear shift mechanism driven by the actuator, a temperature sensor detecting a temperature of the progress status detecting sensor, and a control device controlling the actuator on the basis of an input from the progress status detecting sensor and memorizing a previously obtained gear stopper position and a maximum sensor drift amount that caused by temperature changes of the progress status detecting sensor from a reference temperature, the control method comprising steps of detecting a shift operation, detecting the temperature of the progress status detecting sensor, obtaining the maximum sensor drift amount when shifting the engagement combination on the basis of an input temperature from the temperature sensor, setting a position obtained by subtracting the maximum sensor drift amount from the previously obtained gear stopper position as a control stopper position, and controlling a driving speed of the actuator at a timing when the sleeve reaches the control stopper position or before the sleeve reaches the control stopper position.

Accordingly, the position obtained by subtracting the maximum sensor drift amount, which occurs in response to the changing amount of the temperature, from the previously obtained gear stopper position is set as the control stopper position. The driving speed of the actuator is controlled at the timing when the sleeve reaches the control stopper position or before the sleeve reaches the control stopper position. Hence, the control stopper position, in which the sensor drift is taken into account, is set at positions before the position where the gear stopper is provided. In other words, the sleeve does not contact the gear stopper before reaching the control stopper position. Further, in a case where the temperature of the progress status detecting sensor when shifting the engagement combination is close to the reference temperature of the progress status detecting sensor, the maximum sensor drift amount is also small. Therefore, the control stopper position may be set closer to the position where the gear stopper is provided. As a result, a time necessary for shifting the engagement combination may be shortened.

According to another aspect of the present invention, the previously obtained gear stopper position is a position obtained when the identical engagement combination is established when previously shifting the engagement combination.

According to a further aspect of the present invention, the gear-type transmission apparatus further includes a shift speed sensor outputting a synchromesh shift speed and wherein the control device controls the driving speed of the actuator on the basis of an output of the shift speed sensor and memorizes a shift starting amount, which changes in response to the synchromesh shift speed, the control device obtains the shift starting amount on the basis of an input from the shift speed sensor when changing the engagement combination and sets a position obtained by subtracting the maximum sensor drift amount and the shift starting amount from the previously obtained gear stopper position as a control starting position.

According to a further aspect of the present invention, the shift speed sensor includes at least one of an acceleration opening sensor and an engine torque sensor.

According to a further aspect of the present invention, the reference temperature of the progress status detecting sensor is set within a range between 50 degrees to 90 degrees.

Accordingly, a maximum value of the sensor drift amount is taken into account in the control method for the geer-type transmission apparatus. Therefore, even if the control device fails to accurately learn the gear stopper position, a control satisfying a vehicle condition and needs of a driver may be executed. Hence, a possibility of a collision of the sleeve with the gear stopper at unexpected speed may be reduced.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a diagram schematically illustrating a configuration of a control device for a gear-type transmission apparatus;

Fig. 2 is a map specifying a relationship between changes in temperature and a maximum sensor drift;

Fig. 3 is a map specifying a relationship between an acceleration opening degree and synchromesh shift speed;

Fig. 4 is a map specifying a relationship between the synchromesh shift speed and a follow-up amount;

Fig. 5 is a flowchart illustrating an operation of an ECU; and

Fig. 6 is a diagram illustrating a relationship between elapsed time and a target stroke length and an actual stroke length.

### DETAILED DESCRIPTION

An embodiment of a control method for a gear-type transmission apparatus will be described below.

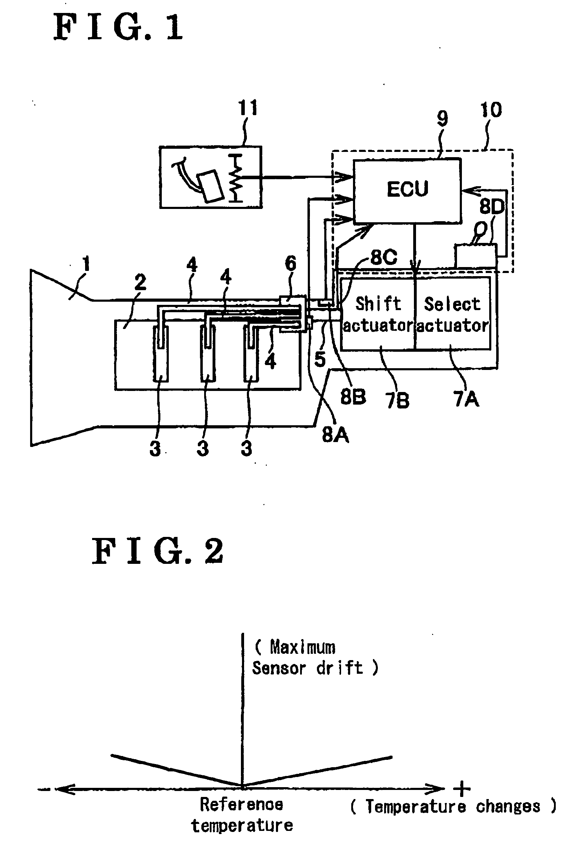

A configuration of the gear-type transmission apparatus to which the control method is adapted will be described below. As illustrated in Fig. 1, the gear-type transmission apparatus for a vehicle includes a transmission body 1 and a gear train 2, which is provided within the transmission body 1. For example, the gear train 2 may be configured with three to six gear sets for a forward movement and a set of gears for a rearward movement having a gear set for a reverse movement. An input shaft and an output shaft are provided at the gear train 2, and additionally, a counter shaft may be provided to the gear train 2 and the gear sets may be appropriately arranged. Further, the gear train 2 may be modified so as to include a gear ratio established by directly connecting the input shaft and the output shaft. The gear train 2 includes plural gear shift mechanisms 3 (clutch mechanisms) each of which has a synchromesh mechanism for shifting engagement patterns of gears.

The gear shift mechanism 3 is a portion for changing the gear sets that transmit power on the basis of a control command from a control device 10. The synchromesh mechanism may be adapted as the gear shift mechanism 3. The synchromesh mechanism may be configured to have two synchronizer rings, which are integrally rotated with the output shaft and frictionally engaged with, for example, corresponding idler gears, more specifically with splines of the corresponding idler gears, by being pressed in an axial direction of the gear train 2, and a sleeve, which is integrally rotated with the output shaft and is engaged with either one of the idler gears by being moved in the axial direction of the gear train 2. The sleeve is provided between, two synchronizer rings, In this embodiment the sleeve of the gear shift mechanism, 3 is engaged with the idler gear, however, the gear-type transmission apparatus may be modified so that the sleeve of the gear shirt mechanism 3 is engaged with the driven gear. Additionally, the gear shift mechanism 3 includes a gear stopper for mechanically stopping the sleeve at an engagement completion position for each gear set. The gear stopper may be provided at the idler gear, with which the sleeve is engaged and contacts. Alternatively, the gear stopper may be configured so as to contact a portion driving the sleeve in order to indirectly stop the sleeve.

The plural idler gears are provided at the output shaft so as to be rotatable relative to the output shaft. The plural idler gears idle in a state where the plural gears are normally engaged with corresponding driving gears provided at the input shaft. In a shift operation, the synchronizer ring is frictionally engaged with either one of the idler gears for establishing a gear stage appropriate to a running condition of the vehicle. Then, the sleeve is engaged with the selected idler gear and further moved in the axial direction of the gear train 2. The sleeve contacts the gear stopper that restricts the further movement of the sleeve in the axial direction. As a result, the input shaft and the output shaft are surely connected, thereby transmitting the power from the input shaft to the output shaft.

Generally, two gear sets are provided at each gear shift mechanism 3, so that two gear sets are arranged at positions opposite from each other relative to the synchromesh mechanism (i.e. the sleeve and the synchronizer rings). The separate and independent synchronizer rings and the common sleeve are provided between two gear sets having the above-mentioned structure.

Each of the gear shift mechanisms 3 is configured so as to be shifted in an axial direction of the gear train 2 by means of each shift fork 4. A base end portion of each shift fork 4 is provided with a rotationally-select-type gate member 6, to which an end portion of a shif-and-select shaft 5 is selectively engaged. The shaft-and-select shaft 5 is driven in a rotational direction (i.e. a select direction) by a rotary select actuator 7A and in a shift direction by a liner shift actuator 7B. The liner shift actuator 7B drives the synchronizer rings and the sleeve of the synchromesh mechanism.

Alternatively, the shift actuator 7B may be provided at the shift-and-select shaft 5 or at the shift fork 4 of the gear shift mechanism 3. In a case where the shift actuator 7B is provided at the shift-and-select shaft 5, one actuator is provided for the gear shift mechanism 3. On the other hand, in a case where the shift actuator 7B is provided at the shift fork 4, the actuator may be provided at each shift fork 4 if the plural shift forks 4 are provided at the transmission apparatus. Alternatively, one actuator may be provided for the shift forks 4 in a case where a shift moans, corresponding to the shift-and-select shaft 5, is separately provided at the transmission apparatus.

The select actuator 7A and the shift actuator 7B are driven by a hydraulic pressure or by electricity. In a case where the select actuator 7A and the shift actuator 7B are driven by the hydraulic pressure, the shift-and-select shaft 5 is driven in the select direction (i.e. a select motion) and in the shift direction (i.e. a shift motion) by supplying a current to each electric solenoid valve that controls an operation fluid pressure or a flow of an operation fluid within each hydraulic circuit. On the other hand, in a case where the select actuator 7A, and the shift actuator 7B are driven by the electricity, the shift-and-select shaft 5 is driven in the select direction (i.e. the select motion) and in the shift direction (i.e. the shift motion) by supplying a current to a motor and the like. The select actuator 7A includes a select sensor 8A for detecting a select position. The shift actuator 7B includes a shift sensor 8B for detecting a shift position. Further, the select actuator 7A and the shift actuator 7B are provided with a temperature sensor 8C for detecting temperatures of the select actuator 7A, and the shift actuator 7B. Additionally, a resistance value fluctuating-type stroke sensor is used as the shift sensor 8B. Further, the select actuator 7A and the shift actuator 7B are configured so as to be operated by an electric switch-type operation lever member 8D and the control device 10 having an electronic control unit (ECU) 9.

A hydraulic pressure-type actuator, such as a direct-drive cylinder and the like, may be used as the actuator. Alternatively, an electrical actuator, such as a motor and the like, may be used as the actuator, In a case where the motor is adapted as the actuator, a rotational power generated by the motor is converted into a stroke movement (i.e. a linear movement) of the shift-and-select shaft 5 or the shift fork 4 by means of, for example, a rack and pinion mechanism,

Each of the select sensor 8A and the shift sensor 8B serves as a progress status detecting means. The progress status detecting means is for detecting an operation progress status of the gear shift mechanism 3. Any desired sensor for detecting displacement may be adapted in accordance with an operation force transmitting structure of the gear shift mechanism 3. For example, in a case where the sensor is provided at portion for sensing a linear motion, a stroke detecting sensor or the like may be adapted. On the other band, in a case where the sensor is provided at a portion for sensing a rotational motion, a rotation angle sensor and the like may be adapted.

The control device 10 memorizes a maximum sensor drift amount (i.e. a maximum sensor drift), which is a property of the sensor that changes in response to a changing amount of temperature of the progress status detecting sensor from a reference temperature. When shifting the gear, the control device 10 obtains the maximum sensor drift from the memorized maximum sensor drift of the temperature changes on the basis of an input temperature from the temperature sensor 8C. The control device 10 sets a position obtained by subtracting the calculated maximum sensor drift from a gear stopper position, which is obtained by leaning, as a control stopper position. The control device 10 controls a driving speed of the actuator (i.e. the shift actuator 7B) at an appropriate timing when the sleeve reaches the control stopper position or before the sleeve reaches the control stopper position. For example, an electronic control device, which includes therein a microcomputer and which is operated by a software, may be used as the control device 10.

The select sensor 8A, the shift sensor 8B, the temperature sensor 8C and an acceleration opening sensor 11 for detecting a depression angle of an acceleration pedal are connected to the ECU 9.

The acceleration opening sensor 11 serves as a shift speed sensor. Alternatively, an engine torque sensor may be used as the shift speed sensor.

The shifting operation of the gear set by the driver is achieved by the ECU 9 of the control device 10, electric switch-type operation lever member 8D and the like. In a case of a manual transmission apparatus, an H-type operation lever, an acceleratiou/deceleration-type linear lever or the like may be adapted as the operation lever 8D. Alternatively, a switch, provided at a steering wheel and the like, may be adapted as the operation lever 8D.

The shifting of the gears by the gear shift mechanism 3 (i.e. the clutch mechanism 3) is achieved in the manner where: firstly, the driver selects a new gear set to be shifted between the input shaft and the output shaft, i.e. the new gear set for establishing a gear ratio appropriate for the driving state of the vehicle; secondly, the input shaft and the output shaft are frictionally engaged and synchronized, thirdly, the sleeve of the gear shift mechanism 3 is engaged with the spline of the idler gear of the selected gear set until the sleeve contacts the gear stopper. As a result, the input shaft is firmly connected with the input shaft via the selected gear set by means of the gear shift mechanism.

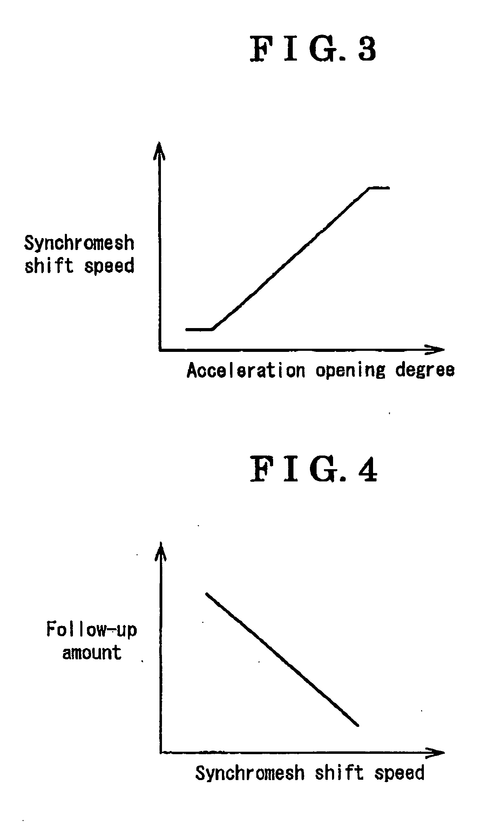

The ECU 9 stores therein a map information illustrated in Fig. 2 and specifying a relationship between temperature changes of the shift sensor 8B (on a horizontal axis) from the reference temperature thereof and the maximum sensor drift (on a vertical axis), a map information illustrated in Fig. 3 and specifying a relationship between an acceleration opening degree and a synchromesh shift speed (i.e. a stroke speed) which is a speed of a sleeve (the shift-and-select shaft 5), and a map information illustrated in Fig. 4 and specifying a relationship between the synchromesh shift speed and a follow-up amount (a shift starting amount) necessary for the sleeve to reach the ordered synchromesh shift speed. The follow-up amount is an amount for offseting a target strove speed of the sleeve and an actual stroke speed of the sleeve.

Generally, the following known control is executed by a control program included in the ECU 9 of the control device 10. When the driver operates the operation lever member 8D and a new gear set (a gear stage) is selected, a signal is transmitted from the operation lever member 8D to the control device 10. Then, the ECU 9 of the control device operates the select actuator 7A and the shift actuator 7B on the basis of the signal outputted from the operation lever member 8D. The shift fork 4 of the corresponding clutch mechanism 3 is driven by the shift actuator 7B being driven, and the engaged gear set is disengaged. As a result, the transmission apparatus is turned to be in a neutral state where the power is not transmitted from the input shaft to the output shaft. Then, the shift-and-select shaft 5 is driven by the select actuator 7A, and the newly selected gear stage is established. In this stage, the power is not immediately transmitted from the input shaft to the output shaft because a rotational speed of the input shaft and an rotational speed of the gear configuring the selected gear set is not synchronized. The rotational speed of the input shaft and a rotational speed of the output shaft need to be adjusted in order to synchronize therebetween and in order to establish a new gear ratio. However, as the output shaft is connected to the wheels and is driven by inertia generated when the vehicle moves, the synchronization of the rotational speeds between the input shaft and the output shaft needs to be achieved by normally adjusting the rotational speed of the input shaft. In other words, gently, a portion of the input shaft is frictionally engaged with a portion of the output shaft in order to synchronize the input shaft and the output shaft while adjusting engine rotations. Then, the sleeve is pressed against the idler gear by means of the shift actuator 7B so that the sleeve is engaged with the spline of the idler gear of the selected gear set. Then, the sleeve is further pressed towards the idler gear of the selected gear set in the axial direction of the gear train 2, thereby achieving the spline-engagement between the sleeve and the idler gear of the selected shaft.

More specifically, the shift fork 4 of the selected gear set corresponding to the selected gear stage is driven by the shift actuator 7B. Then, the sleeve, which structures a part of the synchromesh mechanism, is pressed against the idler gear of the selected gear set and is biased against the idler gear of the selected gear set in a direction where a rotational speed of the gear set and a rotational speed of the input shaft become the same. As a result, the gear set and the input shaft are synchronized, thereby synchronizing the input shaft and the output shaft. The sleeve is further pressed against the idler gear, which structures a portion of the selected gear set, and the sleeve is engaged with the idler gear. The sleeve is further moved in the axial direction so as to be spline-engaged with the idler gear.

The control method for the gear-type transmission apparatus of the embodiment further executes a control after the sleeve is spline-connected with the idler gear of the selected gear set in order to prevent the sleeve from colliding against the gear stopper.

Movement of the sleeve is detected by the shift sensor 8B (i.e. the progress state detecting sensor) as positional information of the sleeve, which is inputted into the control device 10. The control device 10 memorizes the previously obtained gear stopper position corresponding to the newly selected gear set. The control device 10 calculates the temperature changes of the shift sensor 8B from the reference temperature on the basis of temperature information of the temperature sensor 8C, which detect the temperature of the select sensor 8A and the shift sensor 8B. Further, the control device 10 obtains the maximum sensor drift corresponding to the calculated temperature changes on the basis of relational data between the temperature changes and the maximum sensor drift, which is stored in the control device 10. The control device 10 obtains the control stopper position by subtracting the calculated maximum sensor drift value from the previously obtained gear stopper position, so that the control device 10 controls the driving speed of the shift actuator 7B at the appropriate timing when the sleeve reaches the control stopper position or before the sleeve reaches the control stopper position. The sleeve is further moved in the axial direction towards the idler gear of the selected gear set at the controlled speed. Then, the sleeve contacts and is stopped by the gear stopper at the controlled speed.

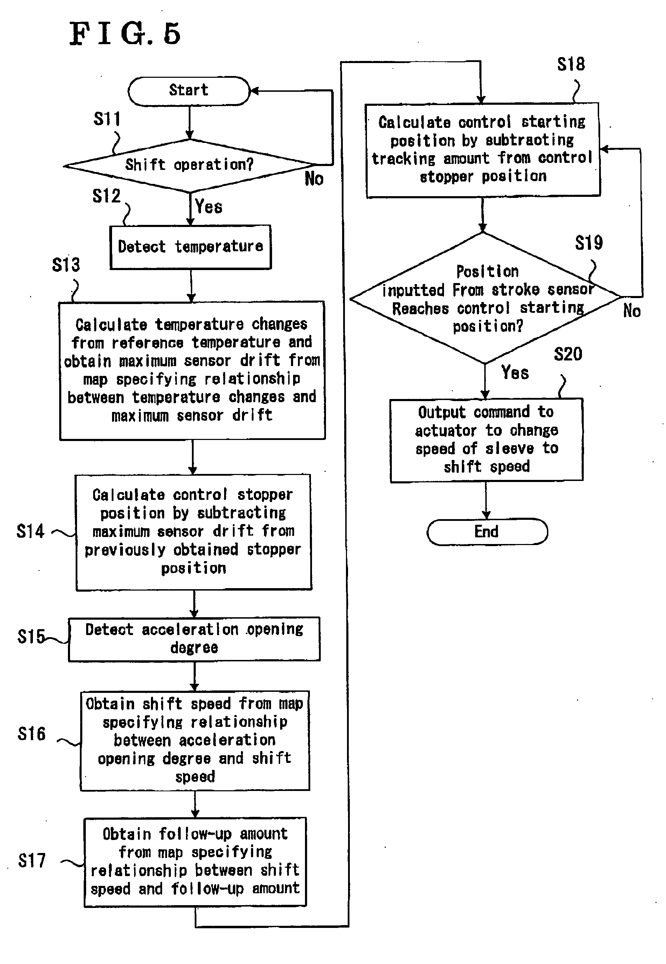

The detailed control process will be described bellow in accordance with a flowchart illustrated in Fig. 5. The process illustrated in Fig. 5 is repeatedly executed at a predetermined control cycle while the vehicle is in motion. The control for preventing the sleeve from colliding against the gear stopper is started with S11 where the ECU 9 of the control device 10 detects whether or not the operation lever member 8D is operated. In a case where the driver conducts the shift operation, the process exceeds to S12 where the temperatures of the select actuator 7A and the shift actuator 7B are detected by the temperature sensor 8C. The temperature changes of the shift actuator 7B from the reference temperature are obtained on the basis of the detected temperatures in S13. Further, the maximum sensor drift is obtained on the basis of the map illustrated in Fig. 2 in S13. Then, the process proceeds to S14, where the control stopper position is calculated by subtracting the calculated maximum sensor drift from the previously obtained stopper position. The process then proceeds to S15 where the acceleration opening degree is detected by the acceleration opening degree sensor 11. Following S15, the process proceeds to S16, where the synchromesh shift speed corresponding to the detected acceleration opening degree is obtained on the basis of the map illustrated in Fig. 3. Following S16, the follow-up amount corresponding to the obtained synchromesh shift speed is obtained on the basis of the map illustrated in Fig. 4 in S17. In S18, a control starting position is calculated by subtracting the follow-up amount from the control stopper position, obtained in S14.

The previously obtained gear stopper position is obtained when the same gear set is previously selected and engaged, and is memorized in the control device 10. Alternatively, as is the case with the known control method, a position of the sleeve, which contacts and is stopped by the gear stopper by the sleeve being moved by the actuating the actuator in a state where the sleeve and the idler gear of the selected gear are engaged, may be set as a detection value (i.e. the previously obtained gear stopper position).

A temperature of the shift sensor 8B in a normal running state of the vehicle, at which an increase of the temperature of the shift sensor 8B is stopped after the vehicle starts moving and keeps moving, may be set as the reference temperature of the shift sensor 8B. More specifically, the reference temperature may be set in a range between 50 degrees to 90 degrees.

In S19; it is determined whether or not the selected sleeve reaches the control starting position on the basis of a signal transmitted from the shift sensor 8B. In a case where the selected sleeve reaches the control starting position, the process proceeds to S20, where the ECU 9 commands the shift actuator 7B so that the selected sleeve is moved at the synchromesh shift speed (the stroke speed), obtained in S16. Accordingly, the selected sleeve is moved at the synchromesh shift speed while the stroke speed of the sleeve is controlled on the basis of the follow-up amount, so that the selected sleeve contacts and stopped by the corresponding gear stopper at the synchromesh shift speed.

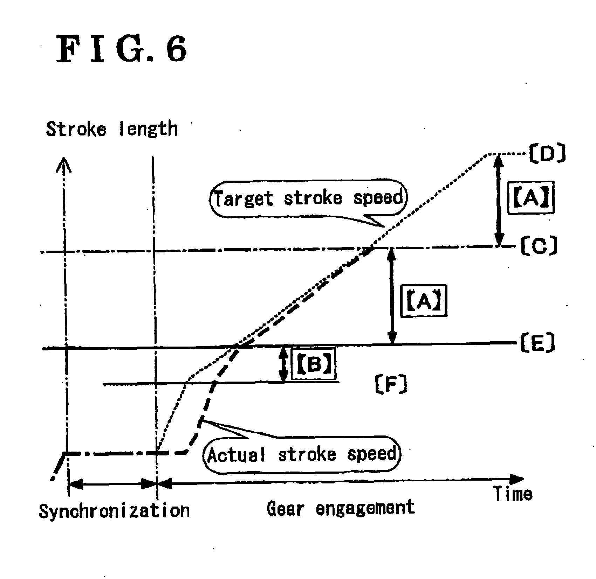

A relationship between a stroke length of the sleeve and an elapsed time in the above-described control is illustrated in Fig. 6, The actual stroke of the sleeve is indicated by a thick dashed line and a stroke (the target stroke) commanded by the ECU 9 is indicated by a dot line in Fig. 6. The maximum sensor drift is indicated by [A], and the follow-up amount is indicated by [B]. The stroke lengths corresponding to predetermined sensor output values are indicated by [C], [D], [E] and [F]. More specifically, the previously obtained gear stopper position, which is previously memorized in the ECU 9, is indicated by [C]. The control stopper position is indicated by [D]. Further, the position [D] indicates a gear stopper position in a case where the sensor drift drifts towards a plus side. On the other hand, a gear stopper position in a case where the sensor drift drifts towards a minus side is indicated by [E], which also indicates the control stopper position. Further, the control starting position is indicated by [F]. A sleeve speed of the selected sleeve is controlled when the selected sleeve reaches the control starting position [F]. In other words, the ECU 9 commands the shift actuator 7B the synchromesh shift speed in response to the acceleration opening degree when the selected sleeve reaches the control starting position ([F]). Then, an actual stroke speed reaches a command stroke speed during the stroke length indicated by [B]. More specifically, the actual stroke speed reaches the target stroke speed at the gear stopper position [E], which is set so as to eliminate chances of the selected sleeve colliding with the gear stopper, so that the selected sleeve contacts the gear stopper at the controlled stroke speed. Further, in a case where the previously obtained gear stopper position may not be appropriate, the sleeve has a chance to collide with the gear stopper at the position [E]. However, as the position [E] is defined by the maximum sensor drift corresponding to the temperature changes of the shift sensor 7B, the sleeve is less likely to collide with the gear stopper at the position [E].

The control starting position may be set at a position before the control stopper position so as to maintain a distance necessary for the sleeve reaching the controlled speed. Alternatively, the control starting position may be set at a position offsetting a fluctuation distance of the gear stopper position, which may be included in the learnt gear stopper position and which is caused by the acceleration or deceleration of the vehicle. The control device 10 outputs the command to the shift actuator 7B to change the driving speed thereof at the timing before the sleeve reaches the control stopper position. The speed of the sleeve, driven by the shift actuator 7B, is changed before the sleeve reaches the gear stopper position, so that the speed of the sleeve reaches the target speed at the gear stopper position. Further, the sleeve is moved to contact the gear stopper by being driven at the target speed.

In a case where the gear shift mechanism 3 includes the shift speed sensor that outputs the synchromesh shift speed, the control device 10 drives the shift actuator 7B at the shift speed obtained by the shift speed sensor. More specifically, in the case where the acceleration opening sensor 11 is used as the shift speed sensor, the shift speed becomes faster when the acceleration pedal is depressed and the acceleration opening degree is great. At a result the sleeve is driven at a higher speed, and the sleeve contacts the gear stopper in a shorter time. Hence, the shift operation, i.e. shifting of the gear set, is quickly completed.

## Claims

1. A control method for a gear-type transmission apparatus, the gear-type transmission apparatus comprising:
a gear train (2) having a plurality of gear engagement combinations each of which is assigned to have different shift stage from each other;
a gear shift mechanism (3) for shifting the shift stage by changing the engagement combination of the gear train (2) and having a synchromesh mechanism, which includes a synchronizer ring and a sleeve, the gear shift mechanism (3) having a gear stopper at an engagement completion position;
an actuator (7B) driving the gear shift mechanism (3);
a progress status detecting sensor (8B) detecting a progress status of the gear shift mechanism (3) driven by the actuator (7B);
a temperature sensor (8C) detecting a temperature of the progress status detecting sensor (8B); and
a control device (10) controlling the actuator (7B) on the basis of an input from the progress status detecting sensor (8B) and memorizing a previously obtained gear stopper position and a maximum sensor drift amount that caused by temperature changes of the progress status detecting sensor (8B) from a reference temperature, the control method comprising steps of:
detecting a shift operation;
detecting the temperature of the progress status detecting sensor (8B);
obtaining the maximum sensor drift amount when shifting the engagement combination on the basis of an input temperature from the temperature sensor (8C);
setting a position obtained by subtracting the maximum sensor drift amount from the previously obtained gear stopper position as a control stopper position; and
controlling a driving speed of the actuator (7B) at a timing when the sleeve reaches the control stopper position or before the sleeve reaches the control stopper position.

2. The control method for the gear-type transmission apparatus according to Claim 1, wherein the previously obtained gear stopper position is a position obtained when the identical engagement combination is established when previously shifting the engagement combination.

3. The control method for the gear-type transmission apparatus according to Claim 1 or Claim 2, wherein the gear-type transmission apparatus further includes a shift speed sensor (11) outputting a synchromesh shift speed and wherein the control device (10) controls the driving speed of the actuator (7B) on the basis of an output of the shift speed sensor (11) and memorizes a shift starting amount, which changes in response to the synchromesh shift speed, the control device (10) obtains the shift starting amount on the basis of an input from the shift speed sensor (11) when changing the engagement combination and sets a position obtained by subtracting the maximum sensor drift amount and the shift starting amount from the previously obtained gear stopper position as a control starting position.

4. The control method for the gear-type transmission apparatus according to Claim 3, wherein the shift speed sensor (11) includes at least one of an acceleration opening sensor (11) and an engine torque sensor.

5. The control method for the gear-type transmission apparatus according to Claim 4, wherein the reference temperature of the progress status detecting sensor (8B) is set within a range between 50 degrees to 90 degrees.
